Europäisches Patentamt

European Patent Office

Office européen des brevets

(11) Publication number: 0 159 304
A1

# EUROPEAN PATENT APPLICATION

(21) Application number: 85850124.0

(22) Date of filing: 09.04.85

(51) Int. Cl.⁴: C 01 B 17/76
B 01 D 53/34

(30) Priority: 13.04.84 SE 8402092

(43) Date of publication of application:
23.10.85 Bulletin 85/43

(84) Designated Contracting States:
AT BE CH DE FR GB IT LI LU NL

(71) Applicant: Boliden Aktiebolag
Box 5508
S-114 85 Stockholm(SE)

(72) Inventor: Wiklund, Johan Elof
Vallisgatan 82
S-252 59 Helsingborg(SE)

(74) Representative: Lundin, Björn-Eric et al,
Boliden Aktiebolag Box 5508
S-114 85 Stockholm(SE)

(54) A method of recovering sulphur dioxide from waste gases of low sulphur dioxide content.

(57) The invention to a method for cleaning gases containing low percentages of sulphur dioxide of their sulphur dioxide content with the aid of a sulphuric-acid contact process effected at elevated pressure, in which the sulphur dioxide is converted to sulphur trioxide and the sulphur trioxide is absorbed in concentrated sulphuric acid. Prior to charging the waste gas to the contact process, the sulphur dioxide content of the gas is adjusted to above about 0.2%. The elevated pressure is so selected in relation to the sulphur dioxide content of the gas charged to the process as to obviate the need of supplying thermal energy separately thereto or removing thermal energy separately therefrom.

EP 0 159 304 A1

./...

Croydon Printing Company Ltd

FIG 1

## A METHOD OF RECOVERING SULPHUR DIOXIDE FROM WASTE GASES OF LOW SULPHUR DIOXIDE CONTENT

The present invention relates to a method of recovering sulphur dioxide from waste gases of low sulphur dioxide content such as to clean the gases of the sulphur dioxide contained therein, in which method the sulphur dioxide is converted catalytically to sulphur trioxide in a sulphuric-acid producing contact process effected at elevated pressure and the sulphur trioxide absorbed in a concentrated sulphuric acid solution.

It is known to produce sulphuric acid by a contact process effected at elevated pressure. Such processes are described, for example, in NO-B-126522 and SE-B-7214782-0, these processes being intended as an alternative to conventional contact processes for the manufacture of sulphuric acid. Today sulphuric acid is manufactured in Canada and in France in accordance with such high--pressure methods based on gases rich in sulphur dioxide derived from elementary sulphur as the sulphur source. The advantage of operating at elevated pressure is that the conversion to sulphur trioxide is improved and that the process can be carried with smaller apparatus than is required to produce sulphuric acid in accordance with a normal contact process. One disadvantage, however, is that more energy is required to force the gas through the plant than with a conventional contact process. A large part of the energy expended can be recovered from the existing gas, however, in an expansion turbine. The size of the apparatus decreases in relation to the pressure used.

At increased pressures the degree of conversion can be maintained at a high level at high temperatures, such as to obtain a higher reaction rate. Consequently the amount of catalyst required is smaller than with the conventional contact process. The final choice of the process pressure used, however, is the result of economic optimation with regard to the reduced investment costs and the higher energy costs.

Because of the progressively more stringent requirements placed on such processes with respect to the protection of the environment, it has been necessary to re-design many sulphuric-acid contact process plants based on single absorption principles for double absorption systems, so that the degree of conversion can be increased from around 97% to more than 99.5%. When reconstructing such plants, it has been necessary to stop production in the actual sulphuric-acid department and gas producing departments associated therewith for a considerable length of time, resulting in an undesirable loss of production. To this can be added the cost of re-constructing the plant.

The present invention, which relates to a novel method of utilizing a sulphuric--acid contact process, enables the degree of conversion in conventional sulphuric-acid contact processes to be raised, which can be desirable from the aspect of environmental care and protection. Thus, as previously inferred, when re-constructing sulphuric-acid contact plants, the invention enables a higher degree of conversion to be attained without requiring any appreciable interruptions in production to be made. Although the invention is particularly suitable for use in the additional cleaning of waste gases deriving from a conventional, single-catalyst sulphuric-acid contact plant, with respect to the sulphur dioxide content of said gases, the invention is not restricted thereto, however, and can be generally applied to remove sulphur dioxide efficiently from all gases of a similar composition and sulphur dioxide content. Thus, the method can be used to advantage in cleaning, for example, waste gases from power plants and thermal plants. The method can also be used to advantage for cleaning those gases obtained when practicing the method described in our earlier SE-A-8401238-4 for recovering metal values from iron-containing materials, in which the gas from the sulphating stage is first freed from its sulphur trioxide content by absorption. The resultant residual gas often contains too little sulphur dioxide for it to be used successfully for the production of sulphuric acid in accordance with a conventional contact process.

The method according to the invention is characterized by the procedural steps set forth in the following claims. Thus, it is essential that the waste gas contains in excess of 0.2% sulphur dioxide. If necessary, minor quantities of gas richer in sulphur dioxide can be charged to the system prior to passing the waste gas to the sulphuric-acid contact process, in order to reach the lower sulphur-dioxide content.

By adjusting the process pressure in accordance with the invention relative to the sulphur-dioxide content of the gas, the contact process effected under pressure conditions can be made to work substantially adiabatically, i.e. in the absence of an exchange of heat with the surroundings. By "substantially adiabatically" is meant here that the process does not require thermal energy to be supplied separately thereto or removed separately therefrom, other than what may normally take place between the existing plant and the surroundings. In other words, it is possible to produce sulphuric acid from waste gases poor in sulphur dioxide without needing to install separate energy-consuming cooling or heating stages, while at the same time cleaning these gases so that they can be safely released to atmosphere without creating environmental problems.

The limiting factor in the process is the absorption stage. When all physical heat in the waste gas, the compression heat, the conversion heat and absorption heat, is to remain in the process, all of this heat will accumulate in the absorption stage. The absorption process must be carried out at a relatively low temperature, depending upon the vapour pressure of the sulphuric acid and upon the requirement of producing a clean output gas, in order that the expansion turbine necessary in recovering pressure energy is able to operate safely with respect to said turbine and with respect to the environment.

Because of the elevated total pressure, however, the partial pressure of the sulphuric-acid vapour and the sulphur trioxide will be low, and thus an increase in temperature can be tolerated in the absorption stage. The vapour pressure for a 98.3% sulphuric acid heated to a temperature of 180°C and standing at atmospheric pressure is, for example, 0.0026 atm while at 5 atm this partial pressure is only 0.00053 atm. The vapour pressure increases rapidly with increasing higher acid temperatures and a higher total pressure must be used. In such cases it may be necessary to install an effective mist separator downstream of the turbine.

During the development of the invention the following empirical formula was found useful when calculating the absorption temperature obtained when practicing the method:

$$(p^{0.2857} - 1) \ (t_g + 273) \ 1.2982^{-1} + t_g + 76 \ C = t_a$$

where p is the process pressure in atm; $t_g$ is the temperature of the waste gas in °C, C is the sulphur-dioxide content of the waste gas introduced to the process in percent by volyme, and $t_a$ is the resultant absorption temperature in °C. It will be seen from the formula that the temperature of the waste gas has a considerable influence on the absorption temperature. For example, if C = 0.3%, p = 6 atm and $t_g$ = 40°C, $t_a$ will be 224°C. If the temperature $t_g$ of the waste gas is increased to 60°C, the absorption temperature will then be 254.3°C. According to the present invention the pressure is selected in dependence on the sulphur dioxide content, suitably so that the absorption temperature will lie beneath about 420°C, although it is preferred to operate at an absorption temperature beneath about 260°C.

The sulphur dioxide content C of a gas exiting from a conventional contact plant is normally 0.2%, or even less. Preferably, however, this sulphur dioxide content is increased to 0.3-0.5%, which can readily be achieved by transferring minor quantities of unconverted gas from the contact plant to the waste-gas treatment system. This transfer of gas does not increase the total volume of the gas to be treated. The highest possible sulphur-dioxide content permitted by the invention is to be preferred, since the heat exchange surfaces required in the process can then be given reasonable proportions. For practical reasons, however, the highest possible sulphur dioxide content permissible within the scope of the invention is about 0.5%.

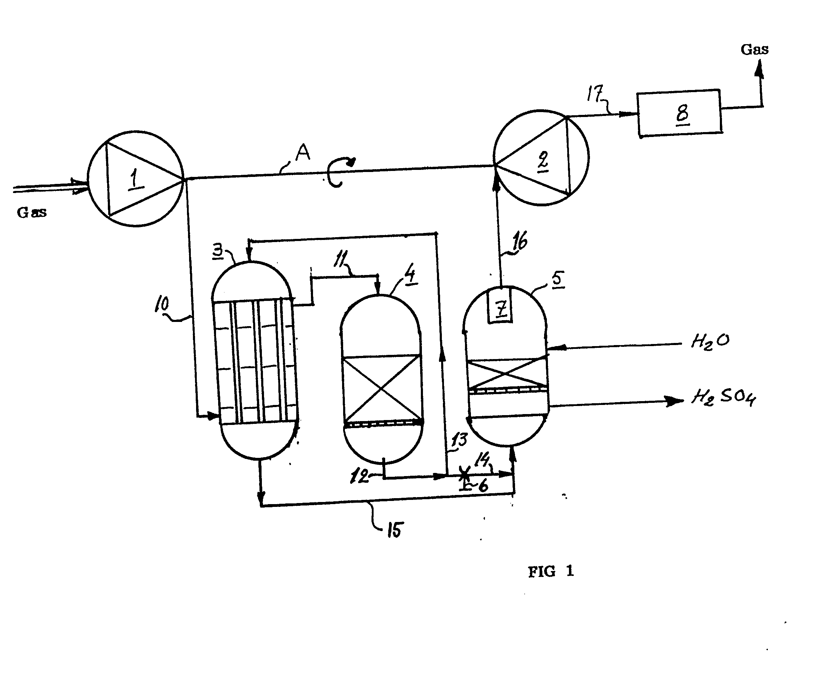

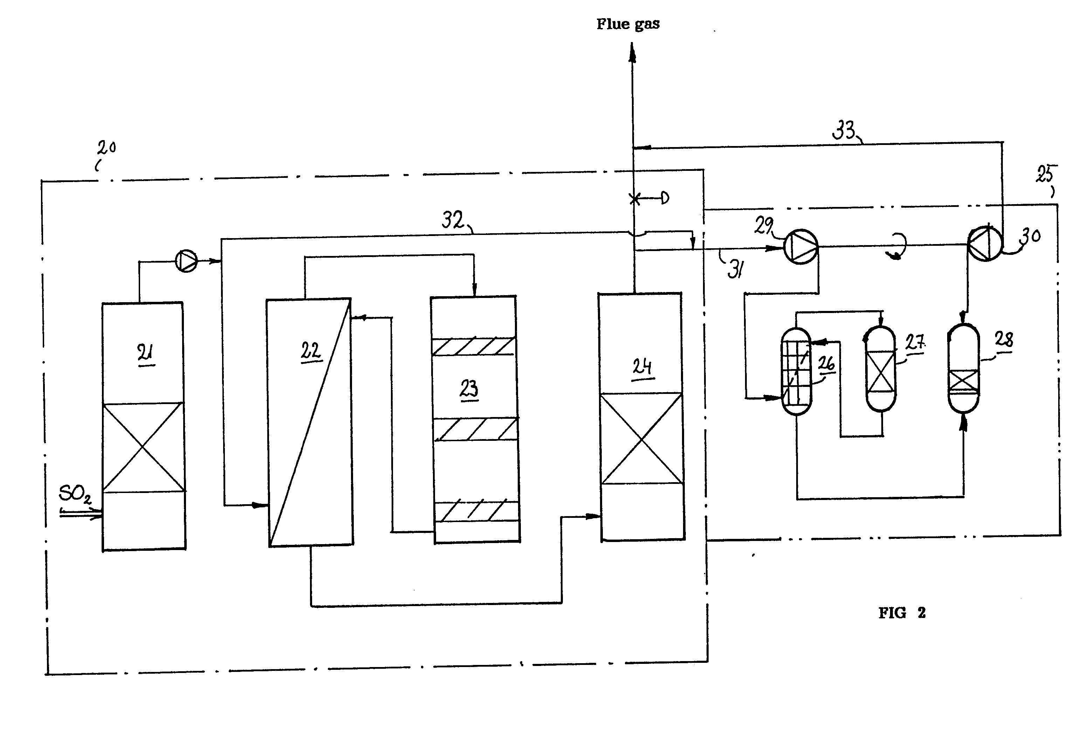

The invention will now be described in more detail with reference to the accompanying drawings, in which Figure 1 illustrates schematically a plant for carrying out the invention, and Figure 2 is a flow sheet illustrating a sulphuric-acid contact process plant in which waste gases are treated by means of the method according to the invention.

The plant illustrated in Figure 1 comprises a turbo-compressor 1, an expansion turbine 2, a heat exchanger 3, a converter 4 for the catalytic oxidation of sulphur dioxide, an absorption tower 5, a gas control valve 6, and mist separators 7, 8.

A dry gas poor in sulphur dioxide and obtained, for example, from the absorption tower of a single-absorption sulphuric-acid contact plant or from some other source, is charged at a temperature beneath 40°C to the gas inlet of the turbo--compressor 1 and is there compressed in the absence of intermediate cooling to a pressure selected with regard to adequate process parameters. The compressed gas is transferred through a pipe 10, to the heat exchanger 3, where an exchange of heat takes place with converted gas obtained from the converter 4. The gas heated in the heat exchanger 3 is removed therefrom through a pipe 11 and transferred to the converter 4, in which the sulphur dioxide present in the gas is oxidized catalytically to sulphur-trioxide in a known manner. Converted gas is removed from the converter 4 through a pipe 12 and divided into two part-streams, one of which is recycled through a pipe 13 back to the heat exchanger 3 for heat exchange with newly arriving gas, and the other is passed to the absorption tower 5 through a pipe 14. The ratio between the two part streams is determined by the amount of sulphur dioxide present in the input gas and the size of the heat exchanger (heat-exchange surface area) and is controlled by means of the gas control valve 6. This ratio also controls the temperature at which the conversion of sulphur dioxide to sulphur trioxide takes place. In order to be able to carry out the method according to the invention, the heat exchanger 3 must be designed to enable heat to be recovered from the converted gas to an extent such that the heat content of the gas transferred to the absorption tower 5 is lower than the sum of the heat content of the compressed incoming sulphur-dioxide containing gas and the heat of conversion.

Thus, the major part of the converted gas is transferred from the heat exchanger 3 through a pipe 15 to the absorption tower 5, where formed sulphur trioxide is absorbed in a 98.3% sulphuric acid while adding a stoichiometric quantity of water and removing produced sulphuric acid, as indicated by the arrows marked $H_2O$ and $H_2SO_4$ respectively.

Immediately prior to being removed from the absorption tower 5, the gas is passed through the mist separator 7, in which any small sulphuric-acid droplets and sulphuric-acid mist present in the gas is removed therefrom, in order to ensure that the gas is substantially free from the aforesaid liquid-phase content before the gas is passed through a pipe 16 to the expansion turbine 2, said turbine being connected directly to the turbo-compressor 1 by means of a shaft A rotated in the direction shown for recovering energy from the compressed terminal gas.

The temperature of the gas falls as it passes through the turbine 2, and a certain amount of sulphuric acid is able to precipitate from the gas. The terminal gas is then passed through a pipe 17 to the second mist separator 3, where it is ensured that any acid droplets formed by condensation and present in the gas are removed therefrom prior to discharging the gas to atmosphere, so as to comply with current environmental regulations concerning terminal gases.

The turbo-compressor 1 is conveniently operated together with a back pressure turbine (not shown), to enable the speed of the compressor, and therewith gas compression, to be readily controlled.

The heat exchanger 3 can be made from merchant steel. In the case of large plants, it may be necessary to couple two or more units together in series. When calculating the size of the heat-exchanging surface, it is necessary to take into account the fact that the increase in temperature through the converter stage must be greater than the mean value of the temperature difference between the converted gas and the sulphur-dioxide containing gas, otherwise the process will not be autothermic, i.e. it will be necessary to introduce thermal energy from an external source.

For a conventional contact process, the amount of catalyst required is normally 200 litres per ton of acid per day. Since when applying such a contact process the amount of acid produced from the terminal gas is only about 2.3% of the total amount of acid produced by the process itself, the amount of catalyst required to treat the terminal gas is only about 2% of this 2000 litres, i.e. 4 l/ton/day.

Because of the elevated pressure and the relatively small amount of sulphur trioxide to be absorbed in the absorption tower, the tower can be given a very simple design. The tower may conveniently comprise a lined casing provided with a single perforated gas-distribution plate with a layer of packing bodies arranged thereabove. The converted gas is introduced into the casing at a location beneath the perforated plate and is allowed to rise up through the perforated plate and the packing bodies. The casing is filled with sulphuric acid up to the level of the packing bodies, so that the bodies are constantly wet with acid. Water is supplied directly to the acid, which is suitably held at a constant level by controlling the amount in which the acid produced leaves the system.

The expansion turbine 2 is suitably a two or three stage steel turbine. When using such a turbine, it is possible to recoup up to 80% of the energy contained by the gas.

Figure 2 is a process diagram illustrating a sulphuric-acid contact process plant in which the terminal gas is treated in accordance with a method according to the invention. The reference 20 in Figure 2 identifies generally a sulphuric--acid contact process plant comprising a drying tower 21, a heat exchanger 22, a contact 23 and an absorption tower 24. The reference 25 identifies generally a smaller contact plant which operates under pressure and which is of the kind illustrated in Figure 1 for treating terminal gas from the plant 20 in accordance with the invention. The smaller plant 25 comprises a heat exchanger 26, a contact (converter) 27 and an absorption tower 28, and also a compressor 29 and an expansion turbine 30. Terminal gas is passed from the absorption tower 24 to the smaller plant 25 through a pipe 31, and when wishing to increase the sulphur dioxide content of the gas entering the plant 25, gas is taken from the drying tower 21 via a shunt line 32. Residual gas from the smaller plant 25 is released to atmosphere, together with any terminal gas released from the absorption tower 24, through a pipe 33, as shown by the arrow referenced "Waste Gas".

The Figure has been drawn to show the size relationship between the plants 20 and 25. In principle, the volume of respective units in the smaller plant 25 need only be about 15% of the volume of corresponding units in the larger plant 20.

In the case of a contact process effected under elevated pressure, the degree of conversion is about 99%. This means that the total degree of conversion in respect of the integrated process is:

$$97.5 + (100 - 97.5) \times 0.99 = 99.975\%$$

### Example

A waste gas containing 0.5% $SO_2$, 1% $O_2$ and 98.5% $N_2$ was charged to a plant of the kind illustrated in Figure 1. When entering the turbo-compressor 1, the temperature of the gas was 60°C and the gas was compressed in the compressor to a pressure of 5 atm. During this compression stage, the temperature of the gas rose to 210°C. The compressed gas was then heated further in the heat exchanger 3 to a temperature of 420°C and then converted in the converter 4. The temperature of the gas rose herewith to 435°C, as a result of the heat developed by the reaction taking place in the converter. The converted gas was then passed to the heat exchanger 3, where it was used to heat incoming gas while cooling to 220°C, whereafter the gas was introduced into the absorption tower 5 for the production of sulphuric acid from the sulphur trioxide contained in the gas. The gas leaving the absorption tower 5 had a pressure of 4.93 atm and a temperature of 240°C, and was passed to an expansion turbine 2, to recover the energy content of the gas. Subsequent to removing in the separator 8 sulphuric acid droplets carried by the gas, the gas was passed to a smoke stack and discharged to atmosphere. It was found that the sulphur dioxide content of the gas had now fallen to 0.0001% and its oxygen content to 0.75%.

## CLAIMS

1.    A method for cleaning waste gases containing small percentages of sulphur dioxide of their sulphur-dioxide content, in which the sulphur dioxide is converted catalytically to sulphur trioxide in a sulphuric-acid contact process effected under elevated pressure and the sulphur trioxide absorbed in concentrated sulphuric acid, characterized by taking measures to ensure that the sulphur-dioxide content of the waste gas prior to introducing said gas to the contact process to a level above about 0.2%, and by so selecting said elevated pressure in relation to the sulphur-dioxide content of the gas charged to the process as to obviate the need of supplying thermal energy separately to the process or of removing thermal energy separately therefrom.

2.    A method according to claim 1, characterized by heating waste gas charged to the process through an exchange of heat with converted gas prior to charging said converted gas to the absorption stage, and by adjusting the sulphur dioxide content to a level of such high magnitude that the increase in temperature of the gas during the conversion stage will exceed the increase in temperature of the incoming gas during its exchange of heat with converted gas but of a sufficiently low magnitude for the temperature in the absorption stage to lie beneath about 420°C, preferably beneath about 260°C.

3.    A method according to claims 1 and 2, characterized by adjusting the sulphur-dioxide content of the waste gas to a level between about 0.3% and 0.5%.

Gas

$H_2O$

$H_2SO_4$

FIG 1

Flue gas

FIG 2

0159304

2/2

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| A | SE-B-394 660 (CANADIAN INDUSTRIES LTD) 4 July 1977 ------- | | C 01 B 17/76 B 01 D 53/34 |
| A | NO-B-126 522 (UGINE KUHLMANN) 19 February 1973 | | |

**TECHNICAL FIELDS SEARCHED (Int. Cl.4)**

C 01 B
B 01 D

The present search report has been drawn up for all claims

| Place of search | Date of completion of the search | Examiner |
|---|---|---|
| STOCKHOLM | 31-05-1985 | LUNDELL B-M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82